# EUROPÄISCHE PATENTANMELDUNG

(11) **EP 1 199 280 A1**
(43) Veröffentlichungstag der Anmeldung: **24.04.2002**
(21) Anmeldenummer: 01124896.0
(22) Anmeldetag: 18.10.2001
(51) Int. Cl.: C01B 17/20, C01B 19/04

(54) **Verfahren zur Herstellung von Metallchalkogeniden mit Hilfe überkritischer Fluide**

(30) Priorität: 19.10.2000 DE 10051926; 12.02.2001 DE 10106428
(71) Anmelder: Fraunhofer-Gesellschaft zur Förderung der angewandten Forschung e.V., 80636 München (DE)
(72) Erfinder: Weber, Andreas, Dipl.-Chem., 47058 Duisburg (DE); Diemann, Ekkehard, Dr.rer.nat., 33739 Bielefeld (DE); Kuhlmann, Christoph, Dipl.-Chem., 32549 Bad Oeynhausen (DE)
(74) Vertreter: Olgemöller, Luitgard, Dr.

(57) **Zusammenfassung**

Die vorliegende Erfindung betrifft ein Verfahren zum Herstellen von Metallchalkogeniden, das dadurch gekennzeichnet ist, daß die Edukte in einem Lösungsmittel gelöst oder suspendiert werden, welches mindestens teilweise protisch ist, sodann die Lösung oder Suspension mit hochkomprimiertem bis überkritischem Kohlendioxid in Kontakt gebracht wird, worauf das Lösungsmittel sowie das Kohlendioxid entfernt werden.

## Beschreibung

Man findet Metallchalkogenidverbindungen (MC) als Katalysatoren in vielen wesentlichen Prozessen oder der Erdölentschwefelung / Hydrodesulfurierung (HDS) sowie als Elektrodenmaterialien. Bei der aktiven Katalysatorspezies handelt es sich zumeist um nanostrukturierte, mesoporöse (binäre oder ternäre) Clusterverbindungen mit entsprechend großen Oberflächen und aktiven Zentren.

Bisher hat man entsprechende Metallchalkogenidverbindungen (z.B. MoS₃) einerseits durch saure Hydrolyse mit Mineralsäuren oder durch säurekatalysierte Kondensationsreaktionen dargestellt. Alternative Verfahren sind thermische Zersetzung von Precursorverbindungen, Sol/Gel-Verfahren und Hydrothermalsynthesen. So beschreibt die US-Patentschrift 4.288.422 ein Verfahren zum Herstellen von Chalkogeniden der Gruppe VIII durch Niedertemperatur-Präzipitation aus nichtwäßriger Lösung. Die Produkte eignen sich als Katalysatoren. Die US-Patentschrift 4.323.480 beschreibt ein Verfahren zur Herstellung von Di- und Polychalkogeniden der Übergangsmetallgruppen IVb, Vb, und von Molybdän und Wolfram, ebenfalls durch Niedertemperatur-Präzipitation aus nichtwäßriger Lösung. Außerdem sei diesbezüglich auf Chem. Rev. 1998, 98, 1 ff (Sonderband Polyoxometallate) verwiesen.

Alle Verfahren weisen spezifische Nachteile im wesentlichen bezüglich der Reaktionsparameter, Reaktionszeit, Isolierung und Art der Endprodukte auf. Die mit den vorstehend genannten Verfahren erhaltenen Produkte sind außerdem zum Teil wesentlich durch anhaftende Teile des Reaktionsmediums verunreinigt. Zur Darstellung des technischen Endproduktes / der aktiven Katalysatorspezies sind zumeist weitere Schritte der Aufarbeitung notwendig (Entfernen des Lösungsmittels, Tempern, Aktivieren). Und schließlich ist die spätere technische Verwendbarkeit des Endproduktes aufgrund der durch die Wahl des Syntheseverfahrens bedingten zeit- und kostspieligen Isolierung beeinträchtigt. Außerdem stellen die vorstehend genannten Verfahren komplementäre Systeme dar, die zu unterschiedlichen Produkten führen.

In der US-Patentschrift 4,619,908 ist ein Verfahren zur Herstellung eines oxidhaltigen Aerogels beschrieben, bei dem in einem ersten Schritt lösliche Metallalkoxide hydrolysiert werden. Das auf diese Weise erzeugte Alkogel wird mit Hilfe einer superkritischen Flüssigkeit in das gewünschte Aerogel überführt. Die WO-Schrift 98/51613 beschreibt die Herstellung von Metalloxiden oder Siliciumdioxid mit Hilfe einer hydrolytischen Kondensation, die in superkritischem CO₂ in Gegenwart eines Co-Solvens wie Ethanol oder Wasser durchgeführt wird. Beide Druckschriften befassen sich ausschließlich mit Systemen mit unveränderlichen Oxidationsstufen der Bestandteile; die Produkte werden analog zu den bekannten Sol-Gel-Verfahren durch hydrolytische Kondensation von Alkoxiden gewonnen. In der WO 98/51613 wird erläutert, daß das superkritische CO₂ dabei als Lösungsmittel fungiert, das die Kollision der Moleküle erleichtert und damit die Kinetik beeinflußt.

**Aufgabe** der vorliegenden Erfindung ist die Bereitstellung eines Verfahrens zur Herstellung von Metallchalkogeniden mit vorzugsweise sehr großer äußerer und/oder innerer Oberfläche, das einerseits nicht die Nachteile des Einsatzes von Mineralsäuren oder thermischer Zersetzung aufweist, andererseits die Herstellung von Produkten ermöglicht, die nicht durch hydrolytische Kondensation von Alkoxiden zugänglich sind.

Diese Aufgabe wird durch ein Verfahren nach Anspruch 1 gelöst.

Die Chalkogenide, die über das erfindungsgemäße Verfahren herstellbar sind, sind prinzipiell nicht beschränkt. So können Verbindungen des Schwefels, des Selens, des Tellurs und des Poloniums hergestellt werden, und zwar sowohl mit binären als auch mit ternären oder noch komplexeren Strukturen, wobei die Produkte mit ternären oder noch komplexeren Strukturen auch Sauerstoff enthalten können. Außerdem lassen sich damit Oxide von Metallen erzeugen, die keine stabilen Alkoxide oder Hydroxide ausbilden können und/oder reduktions-/oxidationsempfindlich sind, z.B. MoO₂ oder gemischte Molybdänoxide. Als Kationen können alle Metallionen eingesetzt werden, wobei insbesondere die Metalle der dritten und vierten Hauptgruppe sowie Übergangsmetalle von Interesse sind. Besonders bevorzugt werden als Kationen Übergangsmetalle der IV., V. und VI., VII und VIII. Gruppe eingesetzt, ggf. auch in Mischung untereinander oder mit Hauptgruppenmetallen. Beispiele für Übergangsmetalle sind Titan, Zirkon, Vanadium, Niob, Chrom, Molybdän, Wolfram, Mangan, Eisen, Kobalt, Nickel, Osmium, Ruthenium, Iridium, Palladium und Platin. Auch Clusterstrukturen sind möglich.

Als Ausgangsverbindungen eignen sich alle solchen, die sich durch Oxidation, Reduktion, Disproportionierung oder sonstige Zersetzungsreaktionen in die entsprechenden Metallchalkogenide überführen lassen, beispielsweise Chromate, Permanganate, die zu Mangandioxid reduziert werden können, oder Thio- oder Oxo- Molybdate, -Antimonate, Thio- oder Oxo-Arsenate, Thio- oder Oxo- Vanadate, Wolframate oder Perrhenate. Den Verbindungen kann bei Bedarf als Reaktionspartner ein geeignetes Oxidationsmittel oder Reduktionsmittel zugegeben werden, um die gewünschte Reduktion oder Oxidation zu bewirken. Entsprechende Materialien sind dem Fachmann geläufig. Als Reduktionsmittel kann beispielsweise Ascorbinsäure in den dafür geeigneten Systemen eingesetzt werden.

Die durch das Hochdruckverfahren der vorliegenden Erfindung herstellbaren Metallchalkogenide lassen sich mit CO₂ aus wäßrigen oder andersartigen Lösungen unter Reduktion, Disproportionierung oder sonstiger Zersetzung der Ausgangsprodukte fällen. Geeignete Lösemittelsysteme sind Wasser sowie organische Lösungsmittel mit vorzugsweise polarem Charakter wie Alkohole (z.B Methanol, Ethanol, Isopropanol) oder dgl. oder Mischungen solcher Lösungsmittel. Vorteilhaft gegenüber dem Einsatz von Mineralsäuren ist der niedrige Preis des Kohlendioxids sowie die Vermeidung von Nebenprodukten (schwermetallhaltige Abfälle / Lösungen wie Dünnsäuren). Die Wahl des Lösungsmittel ist unkritisch, sofern mindestens ein kleiner Teil, vorzugsweise einige Prozent, z.B. 5 Gew.-%, des gesamten Lösungsmittels (ohne Berücksichtigung des Kohlendioxid) von einem protischen Lösungsmittel gebildet werden; es kann aber auch das gesamte Lösungsmittel ein protisches sein. Wenn ersteres der Fall ist, ist es bevorzugt, daß als weiteres Lösungsmittel ein zumindest etwas bis stark polares Lösungsmittel eingesetzt wird. Dessen Zusammensetzung ist im übrigen ebenfalls nicht kritisch. Geeignet sind beispielsweise Dimethylsulfoxid, Dimethylformamid, aber auch Methylenchlorid, Aceton oder dergleichen. Bevorzugt werden Alkohole wie Methanol, ggf. in Mischung mit Wasser, eingesetzt. In einer speziellen Ausgestaltung der Erfindung kann ein Diamin als Templat (Protonenüberträger) zugesetzt werden.

Ein Alkohol kann in entsprechenden Systemen auch die Funktion eines Reduktionsmittels übernehmen, z.B. zur Reduktion von Chromaten oder Dichromaten zu Chromtrioxid. Solche Systeme sind dem Fachmann geläufig.

Der Einsatz von komprimiertem Kohlendioxid bei Drücken von vorzugsweise etwa 1,0 bis etwa 50 MPa, stärker bevorzugt ab etwa 4,0 MPa und insbesondere im Bereich von etwa 6 bis etwa 20 MPa, und bei Temperaturen zwischen 10 und 70°C ermöglicht es, gezielt neue Strukturen zu generieren und eine optimale Abtrennung der Produkte vom Lösungsmittel zu erzielen. Das Kohlendioxid fungiert in Gegenwart des protischen Lösungsmittels hierbei als Säure, die in ihren Eigenschaften weitgehend durch das Hochdruck-Phasengleichgewicht zwischen Gas und Lösungsmittel bestimmt wird.

Es ist bevorzugt, daß das Lösungsmittel anschließend an die voranstehend beschriebene Umsetzung durch Extrahieren mit Kohlendioxid unter überkritischen Bedingungen (P >7,5 MPa; T >32°C) von der entstandenen Festphase abgetrennt wird. Hierdurch kann eine sehr schonende Trocknung des Produkts erreicht werden, wobei durch die geringe Grenzflächenspannung der überkritisch fluiden Phase keine mechanischen Beeinträchtigungen durch Kapillarkräfte auftreten. Damit ist es möglich, auf direktem Wege katalytisch interessante Festkörper vorzugsweise mit großen inneren Oberflächen zu erhalten (z.B. Zeolithe). Man kann dabei Porengrößen im mesoporösen Bereich (d.h. von etwa 2-50 nm) erreichen.

Der Zeitaufwand des erfindungsgemäßen Verfahrens ist im Vergleich zu ähnlich leistungsfähigen Prozessen erheblich geringer.

Ohne daß die nachstehenden Erläuterungen den Umfang der Erfindung beeinträchtigen sollen, sei kurz der vermutete Mechanismus erläutert, der dem erfindungsgemäßen Verfahren zugrundeliegt. In Gegenwart des polaren bzw. protischen Solvens wird in situ Kohlensäure gebildet, die bei den angewandten hohen Drücken eine starke Säure ist. Die ionischen Gitter der Ausgangsverbindungen werden in dieser Umgebung durch zersetzende und ggf. disproportionierende bzw. reduktive Ereignisse zerstört; es entstehen Moleküle, die ggf. zu größeren Verbänden mit Chalkogenbrücken aggregieren und/oder kondensieren. Diese Eigenschaft des superkritischen Kohlendioxid war überraschend, da sie über die eines reinen Lösungsmittels hinausgeht und in das Geschehen eingreift.

Gemäß dem erfindungsgemäßen Verfahren werden die Edukte, beispielsweise Thiomolybdate oder Molybdate, in einem geeigneten Lösungsmittelsystem, bestehend z.B. aus Alkoholen verschiedener Kettenlänge unter eventueller Zugabe von Wasser, gelöst oder in kolloidaler Form suspendiert. Die so erhaltenen Lösungen oder kolloidalen Dispersionen werden z.B. über ein Zerstäubersystem in eine hochkomprimierte bis überkritische Gasphase eingebracht, wobei durch die enthaltenen protolysierbaren Solventien ein entsprechender pH-Wert einstellbar ist und eine entsprechende Reaktion induziert wird / stattfindet. Die Druck/Temperaturbedingungen werden bevorzugt so eingestellt, daß sich das enthaltene Lösungsmittel teilweise bereits während der Reaktion, spätestens aber nach der Bildung der gewünschten Reaktionsprodukte vollständig in der komprimierten Gasphase auflöst. Das verbleibende Gas-Lösungsmittelgemisch wird über einen geeigneten Filter abgezogen. Durch Spülen mit dem überkritischen Fluid lässt sich anschließend eine effektive und schonende Trocknung des Feststoffs erzielen.

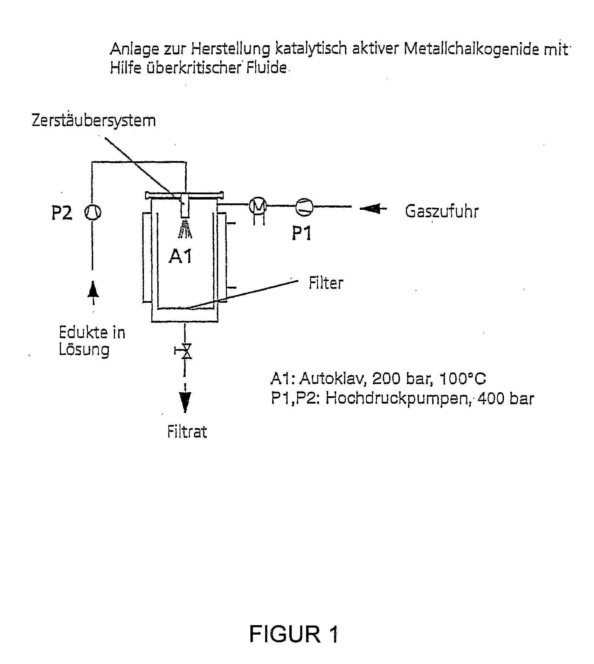

Der eingesetzte Feststoff, z.B. ein Molybdat wie Heptamolybdat oder Thiomolybdat, wird dementsprechend durch Auflösen in einem geeigneten Lösungsmittelsystem (z.B. Wasser, Alkohol, DMSO, DMF) gelöst oder in die entsprechende Suspension kolloidaler oder kristalliner Teilchen überführt. Der Fachmann kann das geeigneten Lösungsmittelsystem hierfür aus seinem Fachwissen heraus wählen. Die erzeugte Lösung oder Suspension wird zur Gewinnung der Produkte in Form fester Pulver z.B. in einem Autoklaven nach **Figur 1** in einer nahekritischen oder überkritischen Gasphase, beispielsweise Kohlendioxid bei einem Druck zwischen 6,5 bis 18 MPa und einer Temperatur zwischen 10 und 70 °C, vorzugsweise über ein Zerstäubersystem eingebracht und dispergiert.

Unter den gegebenen Prozeßbedingungen bilden sich durch Hydrolyse, Aggregation und/oder Kondensationsreaktionen nanostrukturierte Clusterverbindungen (z.B. MoS₃). Anschließend kann das eingesetzte Lösungsmittel durch Auflösen in der komprimierten Gasphase abgetrennt werden. Dann kann das resultierende Gemisch über einen Filter z.B. am Autoklavenboden oder am Kopf des Autoklave abgezogen und so vom zurückbleibenden pulverförmigen Feststoff getrennt werden. Zur anschließenden Trocknung des Produkts wird der Autoklav günstigerweise einige Zeit mit frischem nahe- bis überkritischen Gas gespült. Wegen der geringen Viskosität und Grenzflächenspannung der komprimierten Gasphase bleibt die Feststoffschüttung mechanisch praktisch unbeansprucht.

Das erfindungsgemäße Verfahren kann bei Bedarf auch in Gegenwart von inerten Trägermaterialien wie pulverförmigem SiO₂, Al₂O₃ oder dergleichen erfolgen. In diesen Fällen wird Metallchalkogenid auf den Trägermaterialien abgeschieden.

Nachstehend soll die Erfindung anhand von Beispielen näher erläutert werden.

### Beispiel 1

3g Ammoniumthiomolybdat werden einem Gemisch aus 500 ml Methanol und 40 ml Wasser gelöst. Die so erzeugte, tiefrote Lösung oder kolloidale Dispersion wird in einen Autoklaven eingebracht und mit überkritischem Kohlendioxid bei einem Druck von 12 MPa und einer Temperatur von 40 °C über einen Zeitraum von 30 Minuten durchströmt. Durch das Kohlendioxid werden einerseits die sauren Reaktionsbedingungen eingestellt, andererseits flüssige Reaktionsprodukte und Lösemittel von dem entstandenen Feststoff extrahiert. Das überkritische Fluidgemisch wird am Kopf des Autoklaven abgezogen und in einem Abscheidebehälter entspannt. Das feste Produkt wird durch einen Papierfilter zurückgehalten. Dabei werden die extrahierten Flüssigkeiten abgetrennt, und das Kohlendioxid wird in den Prozess zurückgeführt. Nach 30 Minuten wird der Autoklav entspannt. Als Produkt wird in hoher Ausbeute MoS₃ mit einer mittleren Partikelgröße um 50 nm erhalten. Das trockene Pulver lässt sich leicht in Wasser dispergieren. Im Abscheidebehälter wird das vollständig entfärbte Lösungsmittelgemisch wiedergefunden.

### Beispiel 2

1,12 g Ammoniumthiomolybdat werden in 175 g Methanol und 14,5 g Wasser gelöst. Zu dieser Lösung werden 10 g eines Silicagel-Pulvers gegeben, welches in Form sphärischer Partikeln von 100 um Größe vorliegt. Die Lösung wird in einem Autoklaven vorgelegt und mit Kohlendioxid bei einem Druck von 120 bar und einer Temperatur von 45°C beaufschlagt. Nach 60 Minuten wird das Lösungsmittel durch Spülen mit Kohlendioxid extrahiert. Das Produkt ist ein homogenes Pulver, in dem Molybdänsulfid (MoS₃) feinverteilt auf den Silicagelpartikeln vorliegt.

## Patentansprüche

1. Verfahren zum Herstellen von Metallchalkogeniden, **dadurch gekennzeichnet, daß** ein Edukt, ausgewählt unter schwefel-, selen-, tellur- und poloniumhaltigen Metallverbindungen sowie sauerstoffhaltigen, oxidations- und/oder reduktionsempfindlichen Verbindungen der Übergangsmetalle oder aus Mischungen dieser Verbindungen, in einem Lösungsmittel gelöst oder suspendiert wird, das mindestens teilweise protisch ist, sodann die Lösung oder Suspension mit hochkomprimiertem bis überkritischem Kohlendioxid in Kontakt gebracht wird, worauf das Lösungsmittel sowie das Kohlendioxid entfernt werden.

2. Verfahren nach Anspruch 1, **dadurch gekennzeichnet, daß** die sauerstoffhaltigen, oxidations- und/oder reduktionsempfindlichen Verbindungen der Übergangsmetalle während des Verfahrens einer Oxidation, einer Reduktion oder einer Disproportionierung unterliegen.

3. Verfahren nach Anspruch 2, **dadurch gekennzeichnet, daß** dem Edukt ein geeignetes Reduktionsmittel oder Oxidationsmittel zugesetzt wird.

4. Verfahren nach einem der voranstehenden Ansprüche, **dadurch gekennzeichnet, daß** der Lösung oder Suspension ein inertes, teilchenförmiges Trägermaterial zugegeben wird, bevor sie mit dem Kohlendioxid in Kontakt gebracht wird.

5. Verfahren nach einem der voranstehenden Ansprüche, **dadurch gekennzeichnet, daß** die Suspension oder Lösung des Edukts mit Hilfe eines Zerstäubersystems in einen das Kohlendioxid enthaltenden Autoklaven eingebracht wird.

6. Verfahren nach einem der voranstehenden Ansprüche, **dadurch gekennzeichnet, daß** das Kohlendioxid unter einem Druck von 1,0 bis 50 MPa steht und/oder während des Kontakts von Lösung oder Suspension und Kohlendioxid Temperaturen im Bereich von 10°C bis 70°C eingehalten werden.

7. Verfahren nach einem der voranstehenden Ansprüche, **dadurch gekennzeichnet, daß** das Kohlendioxid zu Ende der Reaktion auf einen Druck gebracht wird, bei dem es das vorhandene Lösungsmittel vollständig aufnimmt.

8. Verfahren nach Anspruch 7, **dadurch gekennzeichnet, daß** der Druck zu Ende der Reaktion gesteigert wird.
